**Europäisches Patentamt**

**European Patent Office**

**Office européen des brevets**

(11) Publication number: **0 232 139**
A2

(12)
# EUROPEAN PATENT APPLICATION

(21) Application number: **87300812.2**

(22) Date of filing: **29.01.87**

(51) Int. Cl.³: **C 08 F 291/02**
C 08 L 27/06
//(C08F291/02, 212:08, 220:18,
220:44), (C08L27/06, 51:04)

(30) Priority: **30.01.86 US 824330**

(43) Date of publication of application:
**12.08.87 Bulletin 87/33**

(84) Designated Contracting States:
**BE DE FR GB IT NL SE**

(71) Applicant: **THE DOW CHEMICAL COMPANY**
2030 Dow Center Abbott Road P.O. Box 1967
Midland, MI 48640(US)

(72) Inventor: **Tong, Wen-Hong**
4508 Oakridge Drive
MidlandMichigan 48640(US)

(74) Representative: **Smart, Peter John et al,**
W.H. BECK, GREENER & CO 7 Stone Buildings Lincoln's
Inn
London WC2A 3SZ(GB)

(54) Impact modifiers for polyvinyl chloride resins.

(57) Improved grafted impact modifiers for polyvinyl resins comprising a substrate of a rubbery, random copolymer of styrene and butadiene having grafted thereto an interpolymer of styrene, acrylonitrile and methylmethacrylate, having a refractive index to match the refractive index of a polyvinyl chloride resin, a particle size from 0.1 to 0.15 microns, a ratio of graft to rubber less than 0.12, a gel content from 90 percent to 95 percent and a bimodal molecular weight distribution such that at least 75 percent thereof has a molecular weight from 5,000 to 1,000,000 and less than 25 percent has a molecular weight less than 5,000.

EP 0 232 139 A2

# IMPACT MODIFIERS FOR
# POLYVINYL CHLORIDE RESINS

The present invention relates to impact modifiers for use in polyvinyl chloride resins, to processes of moulding articles from PVC resins and impact modified PVC resins. More particularly, the present invention relates to improved impact modifiers which when incorporated in polyvinyl chloride resins provide improved impact and burst strength to molded objects prepared therefrom. Impact modifiers, in particular clear impact modifiers for use in the preparation of transparent or translucent polyvinyl chloride resins have been previously described in the art. In U.S. Patent 3,287,443 there are described rubbery graft copolymers comprising a substrate of a rubbery polymer having grafted thereto interpolymers of vinyl aromatic, acrylonitrile and methylmethacrylate monomers. The reference describes in rather complete detail desirable features of certain prior art impact modifiers therein described as well as suitable techniques for their preparation.

While the general features desired of a suitable impact modifier for use in the polyvinyl chloride resins are known and well described in the art, the numerous variables inherent in the preparation thereof have made it heretofore extremely difficult for the skilled artisan to modify various features thereof in order to arrive at improved impact resins. Moreover, it has now been discovered by the present inventor that blends of polyvinyl chloride resins and various impact modifiers inexplicably may provide similar values when tested by normal analytical techniques, such as by Izod impact etc., yet, such blends may differ markedly in practical toughness and durability when molded into objects. Accordingly, after extensive testing, the present inventor has identified impact modifiers of unique properties for use in the preparation of impact modified polyvinyl chloride resins having improved properties when molded into articles, and particularly when molded into containers.

According to the present invention, there is now provided an impact modifier for use in the preparation of impact resistant blends comprising polyvinyl chloride said impact modifier comprising particles of a rubbery butadiene polymer substrate having grafted thereto an interpolymer of styrene, acrylonitrile and methylmethacrylate in proportions such that the graft interpolymer refractive index/substantially matching the
is suitable for
refractive index of a polyvinyl chloride resin, wherein said particles have a volume average particle size from 0.1 to 0.15 micrometers; the weight ratio of grafted interpolymer to rubbery butadiene substrate in said particles (G/R) is less than 0.12; the gel content of the impact modifiers, measured as percent by weight gel, is less than 95 percent; and the graft interpolymer has a bimodal molecular weight distribution such that a first mode constituting at least 75 pecent by weight thereof has a molecular weight between about 5,000 and 1,000,000 and a second mode constituting less than 25 percent by weight thereof has a molecular weight less than 5,000 .

The invention includes a process for preparing a shaped article having both high translucency and high impact resistance, characterized by the steps of; (a) preparing the copolymer, (b) blending the product of step (a) with molten polyvinyl chloride to form an intimate blend; and (c) forming a shaped article therefrom, suitably by extruding the product of step (b) to form a shaped article and cooling and collecting the shaped article.

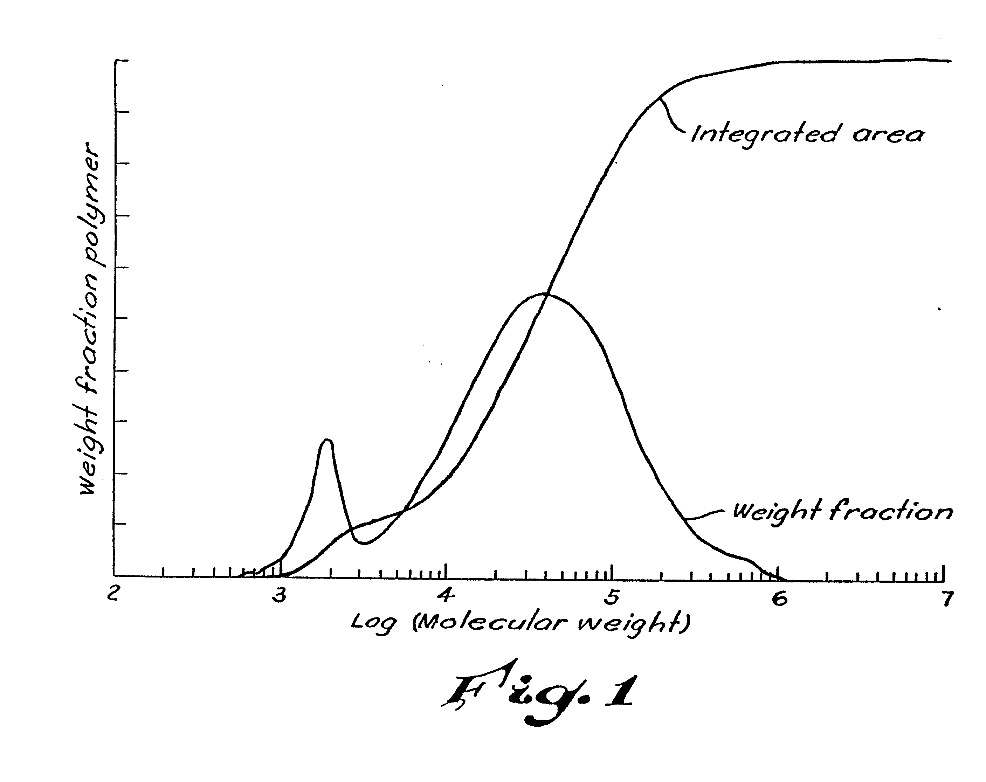

Figure 1 depicts the molecular weight distribution of a representative impact modifier according to the invention as determined by gel permeation chromotography.

Rubbery butadiene substrates for use according to the present invention are previously known in the art.  Suitable polymers include copolymers of 1,3-butadiene and a copolymerizable comonomer polymerized in proportions so that the refractive index thereof substantially matches the refractive index of the polyvinyl chloride resin in which the impact modifier is later blended.  A preferred copolymer of butadiene is a random copolymer of styrene and butadiene and optionally up to 0.3 percent by weight of a crosslinker such as divinyl benzene prepared by emulsion polymerization techniques. Typically, a styrene content of such copolymers may vary from 20 percent to 40 percent. A preferred composition comprises about 30 percent styrene.

Preferably, the emulsion polymerization employs a previously prepared seed latex having a relatively narrow size distribution to provide polymerization centers during the emulsion polymerization. Such a seed latex may comprise polybutadiene, polystyrene, polymethylmethacrylate or a copolymer of butadiene and a polymerizable comonomer such as styrene, methylmethacrylate, etc. Suitably, a seed latex having particle size on the order of several hundred Angstrom units up to one thousand Angstroms is employed.

Typically, the graft interpolymer is prepared by polymerizing styrene, acrylonitrile, and methylmethacrylate in proportions that substantially match the refractive index of the polyvinyl chloride resin in which the impact modifier is later blended. The grafting reaction is conducted in the presence of the rubbery butadiene substrate polymer, suitably also by emulsion polymerization techniques. The resulting grafted copolymer is recovered by coagulation, dewatering, and drying or other suitable recovery technique.

As previously mentioned, the ratio of styrene, acrylonitrile and methylmethacrylate in the graft interpolymer is adjusted in order to prepare a graft
phase having a refractive index substantially matching
the refractive index of the polyvinyl chloride resin in
which the impact elastomer is later blended.  Within
broad limits, the content of the interpolymer is as
follows: styrene from 40 percent to 60 percent,
acrylonitrile from 15 percent to 30 percent and
methylmethacrylate from 20 percent to 40 percent.
All parts are measured as parts by weight.
Preferably the amount of styrene is from 40 to 50
percent, acrylonitrile is from 20 to 25 percent and
methylmethacrylate is from 30 to 35 percent by weight.

The particle size range of the grafted rubber
particles is preferably from 0.11 to 0.13 micrometers.
It is additionaly highly desirable that the particles
define a narrow size distribution.  For example, a
distribution having 85 percent of the particle population within a size distribution of 0.25 micrometers
and preferably within 0.1 micrometers is especially
preferred.  The G/R ratio is preferably from 0.01 to
0.10 and most preferably fom 0.03 to 0.08.  The gel
content is preferably from 90 percent to 93 percent.
In the calculation of the percent gel, the weight of
toluene insoluble fraction is divided by the total
weight of resin.

Finally, in a preferred embodiment, the
molecular weight of the graft phase is such that at
least 85 percent, e.g. at least 90 percent, has a molecular
weight from 5,000 to 1,000,000
and less than 5 percent, e.g. less than 10 percent has
a molecular weight less than 5,000.  Most preferably, the molecular weight distribution of the graft interpolymer corresponds substantially to the distribution contained in Figure 1 which is the print out of a gel permeation chromatogram of the graft interpolymer of Example 2 of the present invention having been dissolved in toluene.

The grafted impact modifiers are employed by blending into polyvinyl chloride resins according to known techniques. Suitably, the impact modifier and the resin are blended by melt blending in an extruder, mill, blender or other suitable device until a homogeneous appearing, melted blend results. The impact modifiers are incorporated in an amount from 1 percent to 20 percent by weight, preferably from 5 percent to 15 percent by weight. The resulting modified polyvinyl chloride resin may be employed to prepare molded articles according to known techniques. Suitable objects and articles are prepared by injection molding, blow molding, extrusion, casting, molding with rotation or any other suitable technique. Additives such as antioxidants, ultraviolet light stabilizers, dyes, colorants, blowing agents, or any other suitable additives may of course be incorporated.

Having described the invention, the following examples are provided as further illustrative of the invention and are not to be construed as limiting. Where provided, percentages and parts are measured as percentages and parts by weight.

Example 1 - Latex Preparation

A styrene/butadiene random copolymer latex is prepared by the following technique. A reactor is charged with an initial reactor charge and a monomer mixture is slowly added over the time of reaction along with an aqueous mix. The initial reactor charge consists of the following ingredients:

|  |  |  | Parts |
|---|---|---|---|
| 1. | Initial Reactor Change | | |
| | a. | Deionized Water | 1570.0 |
| | b. | Sodium Bicarbonate | 1.0 |
| | c. | Versene 100 | 0.3 |
| | d. | Sodium Persulfate (280 A particle size) | 1.5 |
| | e. | Seed Latex (30% solids) | 53.5 |
| | f. | Calsoft L-40 (43% active) | 4.0 |
| | | Total | 1630.1 |

The reactor is sealed and heated to 70°C. The monomer mix consists of the following ingredients:

|  |  |  | Parts |
|---|---|---|---|
| 2. | Monomer Mix | | |
| | a. | Butadiene | 700.0 |
| | b. | Styrene | 300.0 |
| | c. | Divinyl Benzene | 5.0 |
| | d. | n-Octyl Mercaptan | 1.0 |
| | | Total | 1006.0 |

Approximately 15 percent of the monomer mix is added to the reactor. The remaining mixture is added over approximately 6 hours while the reactor is maintained at 70°C. During the same 6 hour monomer addition time, the aqueous mix is added. Ingredients in the aqueous mix are as follows.

34,608-F        -7-

| | Parts |
|---|---|
| 3 . Aqueous Mix | |
| a. Deionized Water | 197.0 |
| b. Calsoft L-40 | 45.6 |
| Total | 242.6 |

After complete addition of both the monomer mix and the aqueous mix, the reactor is held at 70°C for an additional 4 hours. The latex is steam stripped to remove residual monomers. The reactor is then cooled and the resulting latex having a percent solids of 36.8 percent is recovered. The latex particle size is about 0.1141 micrometers with a butadiene content of about 70 percent and a styrene content of about 30 percent. The refractive index is substantially the same as that of a typical polyvinyl chloride resin.

Example 2 - Grafting Reaction

To a reactor is charged 813 parts of the previously prepared rubbery latex of Example 1. The reactor is sealed and heated to a temperature of 70°C.

Over a 2 hour reaction time, 90 parts of a grafting monomer mix and 90 parts of a grafting aqueous mix are added to the reactor. The grafting monomer mix consists of the following ingredients.

| | Parts |
|---|---|
| 4. Grafting Monomer Mix | |
| a. Styrene | 40.40 |
| b. Acrylonitrile | 19.70 |
| c. Methylmethacrylate | 29.60 |
| d. N-Octyl Mercaptan | 0.24 |
| Total | 89.94 |

The grafting aqueous mix consists of the following parts.

|   |   |   | Parts |
|---|---|---|---|
| 5. | Grafting Aqueous Mix | | |
| | a. | Deionized Water | 84.10 |
| | b. | $Na_2S_2O_8$ | 0.12 |
| | c. | Calsoft L-40 | 5.82 |
| | | Total | 90.04 |

After addition of both grafting monomer mix and grafting aqueous mix, the resulting reaction mixture is held at 70°C with stirring for an additional hour. The latex is steam stripped to remove residual monomer. The latex is cooled, vented, coagulated by freezing, centrifuged, washed and dried. The resulting graft latex volume average particle size is about 0.119 micrometers. The G/R ratio is 0.044 and the gel content is 92%.

Example 3 - Blending with Polyvinyl Chloride

A master blend is prepared containing 12 percent by weight of the grafted impact modifier of Example 2 with a polyvinyl chloride resin of substantially identical refractive index. A comparative resin is prepared by similarly blending 12 percent by weight of a common commercially available impact modifier, Kane Ace® B22, available from Kaneka Texas Co. Kane Ace® 22 impact modifiers has properties that differ from those of the impact modifier of this invention with regard to (1) particle size and distribution; (2) graft to rubber ratio; and (3) gel content. Samples of 16 ounce, clear bottles are extrusion blow molded from both resins. Bottle impact strength is determined by dropping sealed, water-filled bottles from various heights.

Bottles prepared from the comparative impact modifier have a mean failure height (the height at which 50 percent of the bottles pass and 50 percent fail) of 12.8 feet. Failure is indicated by leakage of bottle contents, most typically by catostrophic bursting. Bottles prepared from resins containing impact modifier according to the present invention demonstrate a 100 percent pass rate after dropping from a height of 15 feet after filling. This result indicates a substantially improved impact modifier is prepared according to the present invention.

- 11 -

## CLAIMS

1. An impact modifier for polyvinyl chloride resins comprising a graft interpolymer which is a rubbery random copolymer of styrene and butadiene having grafted thereto an interpolymer of styrene, acrylonitrile and methylmethacrylate the ratio of styrene, acrylonitrile and methylmethacrylate being in a proportion such that the refractive index of the grant interpolymer is within the range of the refractive index of polyvinyl chloride resins, characterized in that:-

(a) the volume average particle size of the impact modifier is from 0.1 to 0.15 micrometers;

(b) the graft to rubber ratio of the impact modifier is less than 0.12;

(c) the gel content of the impact modifier is from 90 percent to 95 percent; and

(d) the graft interpolymer has a bimodal molecular weight distribution such that a first mode constituting at least 75 percent by weight thereof has a molecular weight from 5,000 to 1,000,000 and a second mode constituting less than 25 percent by weight thereof has a molecular weight less than 5,000.

2. An impact modifier according to Claim 1, having a volume average particle size from 0.11 to 0.13 micrometers.

3.    An impact modifier according to Claim 1 or Claim 2 wherein the graft to rubber ratio is from 0.01 to 0.10.

4.    An impact modifier according to Claim 3, wherein the graft to rubber ratio is from 0.03 to 0.08.

5.    An impact modifier according to any preceding claim, wherein the gel content is from 90 to 93 percent.

6.    An impact modifier according to any preceding claim, wherein at least 85% of the graft interpolymer has a molecular weight of from 5,000 to 1,000,000 and less than 15 percent has a molecular weight less than 5,000.

7.    An impact modifier according to Claim 6, wherein at least 90 percent of the graft interpolymer has a molecular weight from 5,000 to 1,000,000 and less than 10 percent has a molecular weight less than 5,000.

8.    An impact modifier as claimed in any preceding claim, wherein the proportions of styrene and butadiene in the rubbery copolymer are such that the refractive index thereof is within the refractive index range of polyvinyl chloride resins.

9.    An impact modifier according to Claim 6, wherein the molecular weight distribution of the graft interpolymer corresponds substantially to the distribution of Figure 1.

- 13 -

10. A process for preparing a shaped article having both high transparency and high impact resistance, characterized by the steps of; (a) preparing a graft interpolymer as defined in any preceding claim, (b) blending the product of step (a) with molten polyvinyl chloride to form an intimate blend; and (c) forming a shaped article from said blend.

11. An impact modified polyvinyl chloride resin comprising an intimate blend of a polyvinyl chloride resin and an impact modifier comprising a rubbery random copolymer of styrene and butadiene having grafted thereto an interpolymer of styrene, acrylonitrile and methylmethacrylate the ratio of styrene, acrylonitrile and methylmethacrylate being in a proportion such that the refractive index of the graft interpolymer substantially matches the refractive index of the polyvinyl chloride resin characterized in that:

(a) the volume average particle size of the impact modifier is from 0.1 to 0.15 micrometers;

(b) the graft to rubber ratio of the impact modifier is less than 0.12;

(c) the gel content of the impact modifier is from 90 percent to 95 percent; and

(d) the graft interpolymer has a bimodal molecular weight distribution such that a first mode constituting at least 75 percent by weight thereof has a molecular weight from 5,000 to 1,000,000 and a second mode constituting less than 25 percent by weight thereof has a molecular weight less than 5,000.

Fig. 1

0232139